# EUROPÄISCHE PATENTSCHRIFT

(11) **EP 4 202 235 B1**
(45) Veröffentlichungstag und Bekanntmachung des Hinweises auf die Patenterteilung: **20.08.2025**
(21) Anmeldenummer: 22207101.1
(22) Anmeldetag: 14.11.2022
(51) Int. Cl.: F16B 5/12, F16B 21/02, F16B 5/06

(54) **BEFESTIGUNGSANORDNUNG**
FASTENING ARRANGEMENT
ENSEMBLE DE FIXATION

(30) Priorität: 21.12.2021 DE 102021214752
(43) Veröffentlichungstag der Anmeldung: 28.06.2023
(60) Teilanmeldung: 25187523.3
(73) Patentinhaber: VOLKSWAGEN AG, 38440 Wolfsburg (DE)
(72) Erfinder: Junggebauer, Jens, 38112 Braunschweig (DE); Gwiasda, Nils, 38114 Braunschweig (DE)

(56) Entgegenhaltungen:
- DE-A1- 102013 011 878
- DE-A1- 19 916 098

## Beschreibung

Die Erfindung betrifft eine Befestigungsanordnung mit einem Befestigungselement nach dem Oberbegriff des Patentanspruches 1.

Aus der DE 10 2013 011 878 A1 ist eine beispielhafte Befestigungsanordnung bekannt. Die Befestigungsanordnung weist ein Befestigungselement auf, mittels dem ein Scheibenwischermotor oder dergleichen als ein Anbauteil an einem Karosserieblechteil eines Fahrzeugs elastisch anbindbar ist. Das aus Kunststoff gefertigte Befestigungselement weist ein ausgeweitetes Kopfteil auf, das in einen Elementschaft übergeht. An der Unterseite des Kopfteiles ist ein Elastomerprofilteil mit einer radial nach außen offenen Haltenut angeordnet. In die Haltenut des Elastomerprofilteils des Befestigungselementes ist ein Haltefuß eines Anbauteils eingreifbar. Die im Elastomerprofilteil ausgebildete Haltenut weist eine kopfseitige Nutwand, eine schaftseitige Nutwand sowie einen radial inneren Nutboden auf.

In einem Zulieferwerk erfolgt ein Vormontageprozess, in dem das Befestigungselement am Anbauteil-Haltefuß vormontiert wird. Anschließend wird die Baueinheit aus Anbauteil mit Befestigungselement zum fahrzeugbauenden Werk transferiert, in dem ein Endmontageprozess erfolgt. Im Endmontageprozess wird das Befestigungselement mit seinem Elementschaft durch eine Montageöffnung des Blechteils bis in eine Endmontageposition geführt. In der Endmontageposition drückt das Kopfteil das Elastomerprofilteil unter Aufbau einer elastischen Vorspannung gegen das Blechteil, sodass das in das Elastomerprofilteil eingreifende Anbauteil-Haltefuß in Axialrichtung elastisch vorgespannt ist.

In der DE 10 2013 011 878 A1 ist das Elastomerprofilteil materialeinheitlich und einstückig aus einem Elastomermaterial gebildet. Die Nutbreite der im Elastomerprofilteil ausgebildeten Haltenut ist so bemessen, dass bereits im Vormontageprozess der Haltefuß unter Aufbau einer elastischen Vorspannung in Eingriff mit der Haltenut gebracht ist. Durch die materialeinheitliche sowie einstückige Ausbildung des Elastomerprofilteils gestaltet sich daher unter anderem der Vormontageprozess fertigungstechnisch aufwändig. Zudem ist es im Stand der Technik gängige Praxis, mehrere Elemente zur Befestigung zu nutzen. Aus der DE 199 16 098 A1 ist eine gattungsgemäße Befestigungsanordnung bekannt.

Die Aufgabe der Erfindung besteht darin, eine Befestigungsanordnung mit einem Befestigungselement zur elastischen Anbindung eines Anbauteils an einem Blechteil bereitzustellen, mittels dem ein Vormontageprozess und/oder ein Endmontageprozess zum Zusammenbau des Anbauteils am Blechteil vereinfacht ist.

Die Aufgabe ist durch die Merkmale des Anspruches 1 gelöst. Bevorzugte Weiterbildungen der Erfindung sind in den Unteransprüchen offenbart.

Die Erfindung geht von einer Befestigungsanordnung mit einem Befestigungselement aus, mit dem ein Anbauteil an einem Träger, zum Beispiel einem Blechteil oder dergleichen, elastisch anbindbar ist. Das Befestigungselement weist einen Kopfteil auf, der in einen Elementschaft übergeht. An der Unterseite des Kopfteils ist ein Elastomerprofilteil mit einer radial nach außen offenen Haltenut angeordnet. In die Haltenut des Elastomerprofilteils ist ein Anbauteil-Haltefuß eingreifbar. In gängiger Praxis wird zum Beispiel in einem Zulieferwerk ein Vormontageprozess durchgeführt, in dem das Befestigungselement am Anbauteil-Haltefuß vormontiert wird. Anschließend kann die Baueinheit, bestehend aus dem Anbauteil und dem Befestigungselement, zu einem fahrzeugbauenden Werk transferiert werden, in dem ein Endmontageprozess stattfindet. Im Endmontageprozess wird das Befestigungselement mit seinem Elementschaft durch eine Montageöffnung des Blechteils bis in eine Endmontageposition geführt. In der Endmontageposition drückt das Kopfteil das Elastomerprofilteil unter Aufbau einer elastischen Vorspannung gegen das Blechteil. Auf diese Weise wird der Anbauteil-Haltefuß in der Axialrichtung elastisch vorgespannt. Gemäß dem Anspruch 1 ist das Elastomerprofilteil nicht mehr materialeinheitlich und einstückig ausgebildet, sondern vielmehr zumindest zweiteilig aus einem am Kopfteil des Befestigungselements angeordneten Elastomergrundkörper und aus einem Tellerelement aufgebaut. Das Tellerelement weist zumindest eine schaftseitige Nutwand der Haltenut auf. Zudem ist das Tellerelement mittels einer Axialführung über ein axiales Bewegungsspiel verstellbar auf dem Elementschaft gelagert. Wie später noch beschrieben wird, kann das Tellerelement aus zwei Materialien bestehen. Mittels der Axialführung kann das Tellerelement leichtgängig in Axialrichtung verstellt werden, wodurch der Vormontageprozess vereinfacht wird. Mittels der Axialführung kann eine Nutbreite der im Elastomerprofilteil ausgebildeten Haltenut leichtgängig variiert werden, sodass im Vormontageprozess der Anbauteil-Haltefuß ohne Spannungsaufbau in Eingriff mit der Haltenut des Elastomerprofilteils gebracht werden kann.

Bei der Erfindung wird von folgender Prozess-Reihenfolge ausgegangen: In einer ersten Phase erfolgt die Herstellung des Hauptbauteiles (zum Beispiel ein Wischermotor oder andere Antriebe oder Steuergeräte) und sowie eine separate Herstellung des erfindungsgemäßen Befestigungselements (oder Clipelements), In einer zweiten Phase erfolgt eine Vormontage, bei der das Befestigungselement an einen Haltefuß des Hauptbauteils angebracht wird. Damit entsteht ein verbaufertiger Zusammenbau zum Beispiel im Hause des Lieferanten. Das erfindungsgemäße Tellerelement kann sich noch axial auf dem Clipelement bewegen. Es besteht noch keine Vorspannung auf den Elastomerkomponenten. Es wird zudem eine Vorrastung aufgebaut. Das Befestigungselement ist auf dem Haltefuß des Hauptbauteils (oder Anbauteils) durch ein leichtes Einrasten des Tellerelementes auf dem Befestigungselement durch eine Verliersicherung, bevorzugt eine Nut-Steg-Geometrie. Die Nut ist breit ausgeführt um dem Steg eine axiale Verschiebung zu ermöglichen. In einer dritten Phase erfolgt ein Transport des verbaufertigen Zusammenbaus vom Lieferanten zu den Montagelinien des Fahrzeugbauers. In einer vierten Phase erfolgt die Endmontage mit einem Anbau des verbaufertigen Zusammenbaus an der Montagelinie an das Fahrzeug an ein Trägerteil (oder direkt an eine Karosserie oder an ein Verbundteil). Das Anliegen bzw. die endgültige Vorspannung auf die Elastomerkomponenten ist aufgebaut und verbleibt.

Das erfindungsgemäße Gesamtbauteil, bestehend aus dem Befestigungselement und dem Tellerelement, stellt technische Möglichkeiten bereit, um die Nachteile des Standes der Technik zu beheben beziehungsweise abzumildern. Im Wesentlichen besteht die Idee in der Kombination aus Zwei-Komponenten-Bauteilen (das heißt Befestigungselement und Tellerelement), die auf spezielle Weise ineinandergreifen und am Hauptbauteil vormonierbar sind. Die Vormontage erfolgt vorzugsweise in der Art, dass zunächst das Clipelement an den Haltefuß des Anbauteiles angebracht wird und anschließend das Tellerelement auf dieses gesteckt wird. Das Stecken kann manuell, jedoch vorzugsweise automatisiert, erfolgen. Nach dem Stecken des Tellerelementes ist dieses noch axial beweglich auf dem Clipelement. Dadurch entsteht eine leichtere Anpassfähigkeit an das Umfeld sowie Robustheit während der Montage und des Transportes.

Ein Kern der Erfindung besteht in der Kombination aus zwei Bauteilen, nämlich dem Befestigungselement und dem Tellerelement, die beide als Zwei-Komponenten-Bauteile realisierbar sind und auf spezielle Weise ineinandergreifen und sich am Haltefuß des Anbauteils in allen oben erwähnten Phasen festhalten sowie dieses Hauptbauteil ab der vierten Phase selbst festhalten und dämpfen können. Das Tellerelement ist vor der endgültigen Montage des Anbaubauteiles (also im sog. Anlieferzustand = verbaufertig) axial verschiebbar auf dem Befestigungselement. Das technische Zusammenspiel dieser beiden Zwei-Komponenten-Bauteile ist nach der finalen Montage durch entsprechende Auslegung variabel. Dadurch entsteht eine leichtere Anpassfähigkeit an das Umfeld, an die Anforderungen sowie eine höhere Robustheit. Jedes der beiden Elemente besteht aus einer Hart- und einer Elastomerkomponente.

Eine wichtige Eigenschaft/ Vorteil besteht in der Verschiebbarkeit des Tellerelements entlang der Längsachse des Befestigungselementes im Vormontagezustand. Die gewünschte Vorspannung bzw.- das Anliegen der Elastomerbereiche (jeweils des Befestigungselementes und des Tellerelementes) auf bzw. an dem Trägerteil und dem Haltefuß wird während der Endmontage des Anbauteils an das Trägerteil (d.h. in der vierten Phase) aufgebaut. Die axiale Verschiebbarkeit des Tellerelementes auf dem Clipelement sorgt für einen sicheren Montagevorgang sowie problemloses Transportieren und Handling bis zur finalen Montage.

Gemäß einer ersten erfindungsgemäßen Ausführungsform ragt zumindest ein Axialsteg vom Innenumfang des Tellerelements vor. Der Axialsteg wirkt mit einer im Nutboden der Haltenut befindlichen Axialnut zusammen, in der der Axialsteg des Tellerelements axial verstellbar, jedoch drehfest geführt ist. In einer einfachen Ausgestaltung kann die Axialnut als eine Materialunterbrechung im Elastomermaterial des Elastomergrundkörpers ausgebildet sein.

Für eine später beschriebene stabile Klemmverbindung des Befestigungselements am Blechteil ist der Aufbau einer später beschriebenen vordefinierten Klemmkraft zwischen dem Befestigungselement und dem Blechteil von Relevanz. Vor diesem Hintergrund kann die im Nutboden der Haltenut des Elastomerprofilteils befindliche Axialnut kopfseitig mit einem Axialanschlag enden. Im Endmontageprozess begrenzt dieser Axialanschlag eine Axialbewegung des Tellerelements in Richtung auf das Kopfteil. Damit wird auch eine Steckbewegung des Befestigungselements in die Montageöffnung des Blechteils während des Endmontageprozesses begrenzt.

In einer bevorzugten technischen Umsetzung kann das Tellerelement über eine, bevorzugt werkzeugfrei lösbare, Verliersicherung am Befestigungselement gehaltert sein. Auf diese Weise kann das Befestigungselement zusammen mit dem Tellerelement noch vor Durchführung des Vormontageprozesses als Baueinheit vorgehalten werden. Konstruktiv einfach ist es, wenn die Verliersicherung miteinander zusammenwirkende Formschlußpartner aufweist, die sowohl am Innenumfang des Tellerelements als auch am Außenumfang des Elementschafts ausgebildet sind. Beispielhaft können die Formschlußpartner eine am Außenumfang des Elementschafts ausgebildete Axialnut sowie ein am Innenumfang des Tellerelements ausgebildeter Vorrast-Steg sein, der in die Axialnut einragt.

Für eine stabile Halterung des Befestigungselements am Blechteil ist es bevorzugt, wenn das Tellerelement als Zwei-Komponenten-Bauteil ausgebildet ist. In diesem Fall kann die schaftseitige Nutwand aus Elastomermaterial eine Weichkomponente bilden. Zudem kann das Tellerelement eine, der Schaftspitze zugewandte Hartkomponente aufweisen, die im Endmontagezustand großflächig auf dem Öffnungsrandbereich des Blechteils abgestützt ist.

Das Befestigungselement kann während des Endmontageprozesses auf unterschiedliche Art und Weise am Blechteil befestigt werden. Fertigungstechnisch einfach ist es, wenn das Befestigungselement im Bereich der Schaftspitze des Elementschafts zumindest einen Befestigungsnocken aufweist, der vom Elementschaft radial nach außen abragt. Der Endmontageprozess kann in diesem Fall durch eine Steck-Dreh-Betätigung erfolgen. Hierzu wird das Befestigungselement zuerst in der Steckrichtung durch die Montageöffnung des Blechteils geführt. Anschließend erfolgt eine Drehbetätigung, bei der das Befestigungselement bis in die Endmontageposition gedreht wird. In Endmontageposition untergreift der Befestigungsnocken einen Öffnungsrandbereich des Blechteils. Zudem ist in der Endmontageposition der Öffnungsrandbereich des Blechteils mit der aufgebauten axialen Vorspannung zwischen dem Tellerelement und einer Oberseite des Befestigungsnockens geklemmt.

Eine stabile Klemmung des Öffnungsrandbereiches der Montageöffnung des Blechteils zwischen dem Tellerelement und der Oberseite des Befestigungsnockens ist von großer Bedeutung für eine betriebssichere Halterung des Anbauteils. Vor diesem Hintergrund kann die Axialsteg-Geometrie wie folgt gestaltet sein: So kann in der Endmontageposition der Axialsteg des Tellerelements unter Aufbrauch des axialen Bewegungsspiels bis in Druckanlage mit dem Axialanschlag des Befestigungselementes geführt sein. Das Tellerelement stützt sich daher über seinen Axialsteg an dem Axialanschlag des Befestigungselementes ab, wodurch das Tellerelement das Blechteil mit einer vordefinierten Klemmkraft gegen die Oberseite des Befestigungsnockens drücken kann.

Aufgrund der erfindungsgemäßen zweiteiligen Ausführung des Elastomerprofilteils kann das Tellerelement für eine Montagevereinfachung jederzeit axial verschoben werden. Für Blechteile unterschiedlicher Blechstärke können jeweils unterschiedliche Tellerelemente bereitgestellt werden, deren Axialsteg-Höhe der jeweiligen Blechstärke angepasst ist. Hierbei gilt: Je größer die Blechstärke, desto kleiner die Axialsteg-Höhe. Auf diese Weise verbleibt ein größeres axiales Bewegungsspiel, bis der Axialsteg des Tellerelements in Druckanlage mit dem Axialanschlag des Befestigungselementes gebracht wird, um eine vordefinierte Klemmkraft bereitzustellen. Umgekehrt gilt: Je geringer die Blechstärke, desto größer der Axialsteg-Höhe.

Nachfolgend ist ein Ausführungsbeispiel der Erfindung anhand der beigefügten Figuren beschrieben.

Es zeigen:
- Fig.1 und 2: jeweils unterschiedliche Seitenansichten eines Befestigungselements in Alleinstellung;
- Fig. 3: das Befestigungselement in einer Explosionsansicht mit demontiertem Tellerelement;
- Fig. 4 und 5: unterschiedliche Schnittdarstellungen des Befestigungselements;
- Fig. 6 bis 11: jeweils Ansichten, anhand derer eine Prozessabfolge für den Zusammenbau eines Anbauteils mit einem Blechteil veranschaulicht ist.

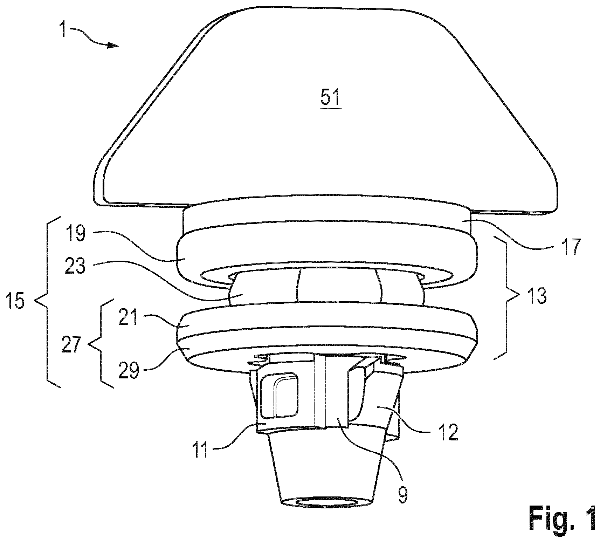

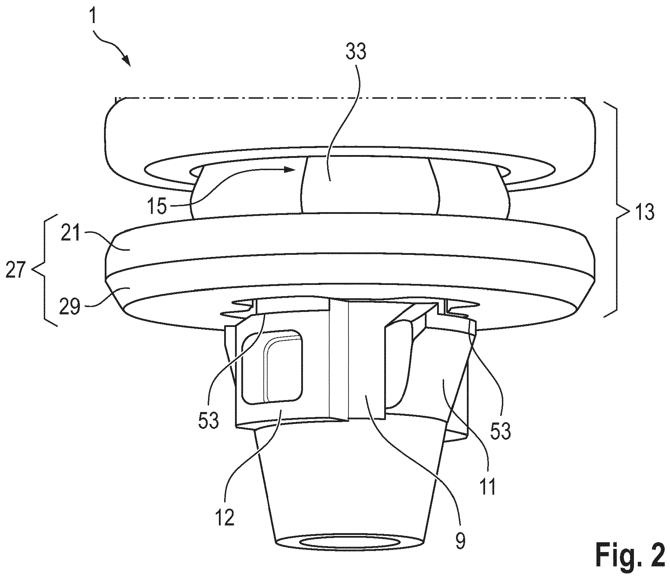

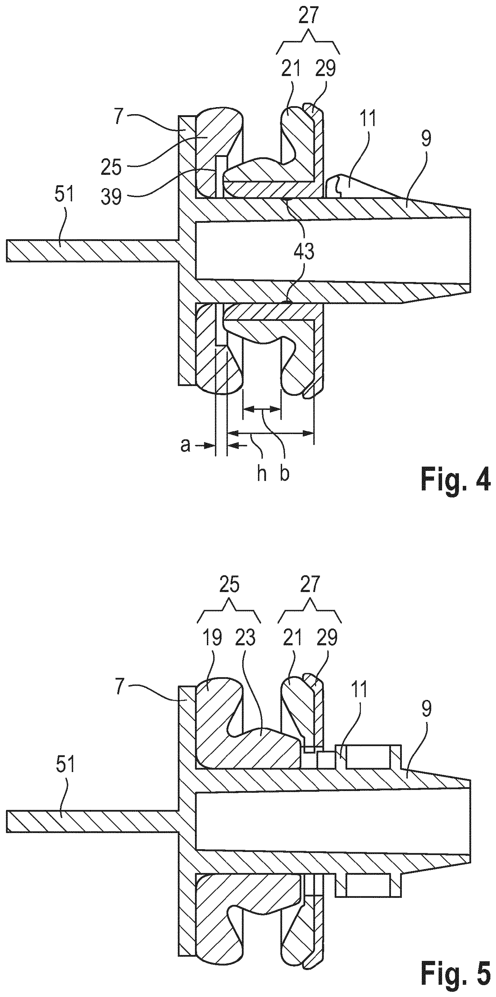

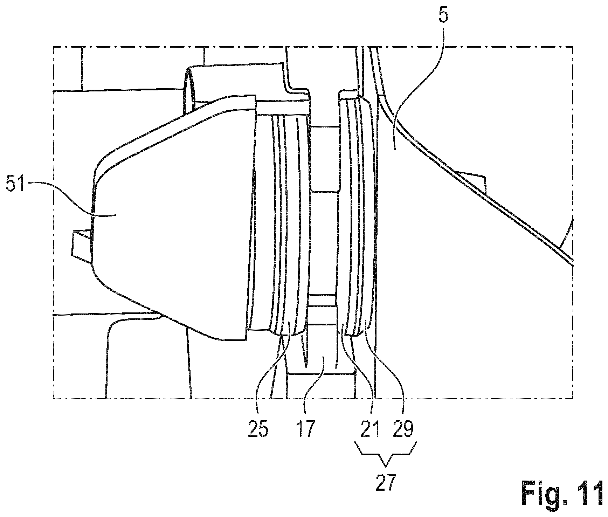

In den Fig. 1 bis 3 ist ein Befestigungselement 1 in unterschiedlichen Ansichten dargestellt. Mithilfe des Befestigungselements 1 ist ein Anbauteil 3 an einem Karosserieblechteil 5 elastisch anbindbar, wie es in der Fig. 11 angedeutet ist. Das aus Kunststoff gefertigte Befestigungselement 1 weist ein ausgeweitetes Kopfteil 7 auf, das in einen Elementschaft 9 übergeht. Im Bereich einer Elementschaftspitze sind Befestigungsnocken 11, 13 ausgebildet, die vom Elementschaft 9 radial nach außen abragen. Zudem ist an der Unterseite des Kopfteiles 7 ein Elastomerprofilteil 13 mit radial nach außen offener Haltenut 15 angeordnet. In die Haltenut 15 ist ein Haltefuß 17 des Anbauteils 3 eingreifbar. Wie aus der Fig. 4 oder 5 hervorgeht, ist die Haltenut 15 mit einer kopfseitigen Nutwand 19, einer schaftseitigen Nutwand 21 sowie einem radial inneren Nutboden 23 ausgebildet.

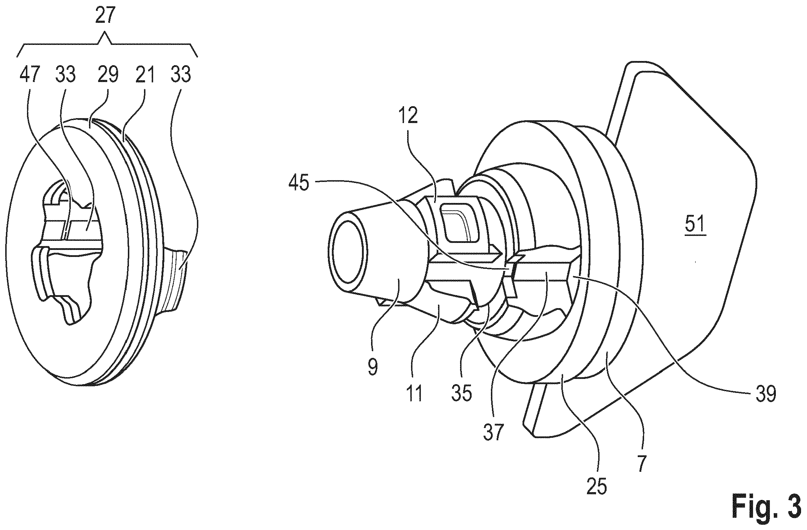

Gemäß den Fig. 3 und 4 ist das Elastomerprofilteil 13 nicht materialeinheitlich und einstückig ausgebildet, sondern vielmehr zweiteilig aufgebaut, und zwar mit einem am Kopfteil 7 des Befestigungselements 1 angeordneten Elastomergrundkörper 25 und einem Tellerelement 27.

Das Tellerelement 27 ist in den Fig. 4 und 5 als ein Zwei-Komponenten-Bauteil ausgebildet, und zwar mit der schaftseitigen Nutwand 21 aus Elastomermaterial, die die Weichkomponente bildet, und einer der Schaftspitze zugewandten Hartkomponente 29, die im Endmontagezustand auf dem Blechteil 5 abgestützt ist. Im Elastomergrundkörper 25 sind dagegen die kopfseitige Nutwand 19 und der radial innere Nutboden 23 ausgebildet.

Das Tellerelement 27 ist mittels einer Axialführung über ein Bewegungsspiel a (Fig. 4) axial verstellbar auf dem Elementschaft 9 gelagert. Auf diese Weise kann das Tellerelement 27 in der Axialrichtung leichtgängig verstellt werden, um eine Nutbreite b (Fig. 4) zwischen den beiden gegenüberliegenden Nutwänden 19, 21 einzustellen.

Die Axialführung weist gemäß der Fig. 3 die am Tellerelement-Innenumfang ausgebildeten, einander diametral gegenüberliegenden Axialstege 33 auf, die vom Tellerelement-Innenumfang 27 axial um eine Axialsteg-Höhe h (Fig. 4) vorragen. Es ist hervorzuheben, dass jeder Axialsteg 33 zweiteilig sowohl aus der Hartkomponente 29 als auch aus dem Elastomermaterial der schaftseitigen Nutwand 21 aufgebaut ist, wie es aus den Figuren 3, 4 oder 8 hervorgeht.

Der Elastomergrundkörper 25 ist gemäß der Fig. 3 zwischen der Kopfteil-Unterseite und einem am Elementschaft 9 ausgebildeten Ringbund 35 (Fig. 3) ortsfest positioniert.

Jeder der Axialstege 33 des Tellerelements 27 ist in einer, im Nutboden 23 der Haltenut 15 befindlichen Axialnut 37 (Fig. 3) axial verstellbar, jedoch drehfest geführt. Die jeweilige Axialnut 37 ist dabei als eine Materialunterbrechung im Elastomermaterial des Elastomergrundkörpers 25 ausgebildet. Zudem weist die im Nutboden 29 der Haltenut 15 befindliche Axialnut 37 kopfseitig einen Axialanschlag 39 (Fig. 3) auf, der in einem später beschriebenen Endmontageprozess eine Axialbewegung des Tellerelements 27 in Richtung auf das Kopfteil 7 begrenzt und damit eine Steckbewegung des Befestigungselements 1 in eine Montageöffnung 41 des Blechteils 5 während des Endmontageprozesses begrenzt.

Wie aus der Fig. 4 weiter hervorgeht, ist das Tellerelement 27 über eine Verliersicherung 43 am Elementschaft 9 des Befestigungselements 1 axial verstellbar geführt. Gemäß der Fig. 3 weist die Verliersicherung 43 am Außenumfang des Elementschafts 9 eine Axialnut 45 sowie einen am Innenumfang des Tellerelements 27 ausgebildeten Vorrast-Steg 47 auf, der in die Axialnut 45 einragt.

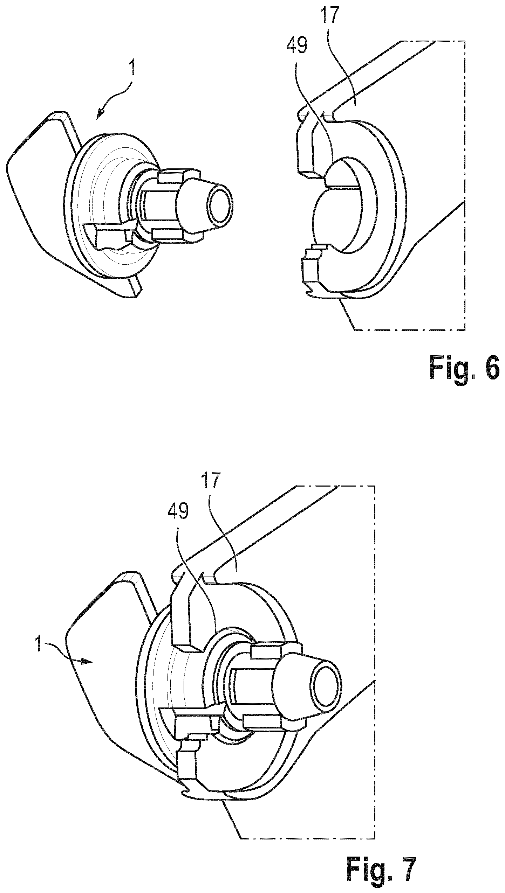

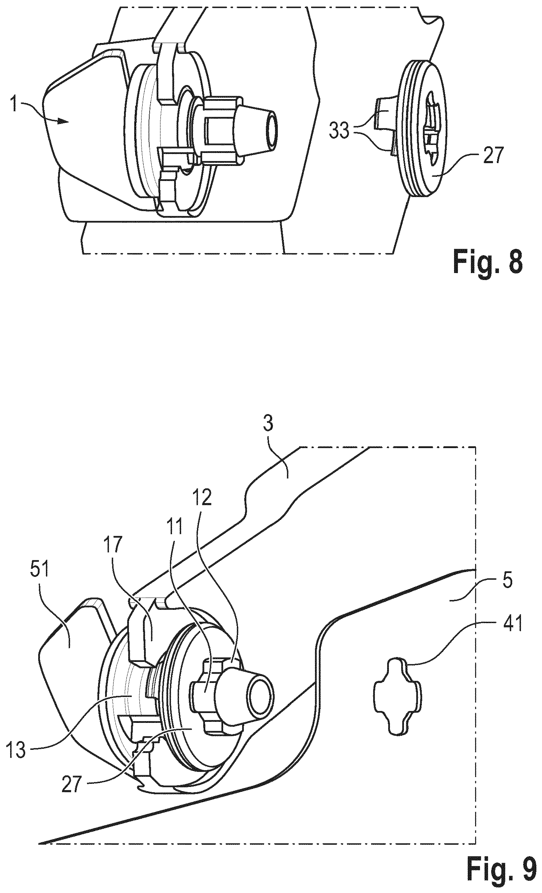

Nachfolgend wird anhand der beigefügten Fig. 6 bis 8 ein Vormontageprozess beschrieben, bei dem das Befestigungselement 1 am Haltefuß 17 des Anbauteils 3 vormontiert wird. Demzufolge wird gemäß der Fig. 6 und 7 bei noch gelöstem Tellerelement 27 das Befestigungselement 1 mit seinem Elementschaft 9 durch ein C-förmiges Befestigungsauge 49 des Anbauteil-Haltefußes 17 geführt. Anschließend wird gemäß der Fig. 8 das Tellerelement 27 auf den Elementschaft 9 des Befestigungselements 1 geschoben, bis der Vorrast-Steg 47 in losem Rasteingriff mit der am Außenumfang des Elementschafts 9 befindlichen Axialnut 45 kommt, wodurch die Verliersicherung 43 bereitgestellt ist. Der Vormontageprozess findet daher ohne Aufbau einer Spannung statt.

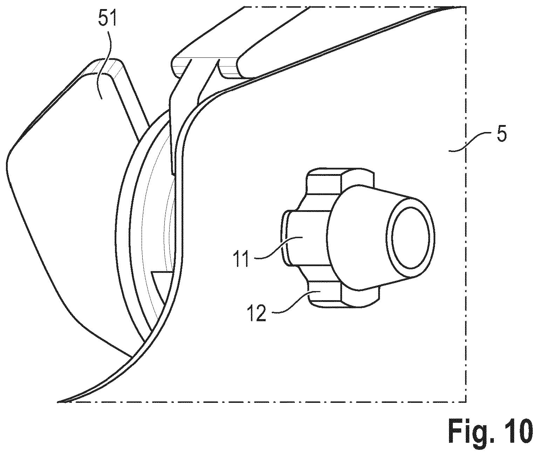

Anschließend wird ein Endmontageprozess gemäß den Fig. 9 bis 11 durchgeführt. Der Endmontageprozess erfolgt mittels einer Steck-Dreh-Betätigung des am Kopfteil 7 ausgebildeten Drehgriffes 51. Zunächst wird das Befestigungselement 1 mit seinem Elementschaft 9 in einer Steckrichtung durch die Montageöffnung 41 des Blechteils 5 geführt und anschließend das Befestigungselement 1 bis in die Endmontageposition gedreht, in der die Befestigungsnocken 11, 12 einen Öffnungsrandbereich der Montageöffnung 41 des Blechteils 5 untergreifen. In der Endmontageposition drückt das Kopfteil 7 das zweiteilige Elastomerprofilteil 13 unter Aufbau einer elastischen Vorspannung gegen das Blechteil 5, sodass der Anbauteil-Haltefuß 17 in Axialrichtung elastisch vorgespannt wird. Zudem ist in der Endmontageposition der Öffnungsrandbereich der Montageöffnung 41 des Blechteils 5 mit einer vordefinierten Klemmkraft zwischen dem Tellerelement 27 des Befestigungselements 1 und einer Oberseite 53 der Befestigungsnocken 11, 12 geklemmt. Deren Bauteilgeometrie entspricht der Bauteilgeometrie der in der DE 10 2013 011 878 A1 offenbarten Nocken.

Zudem sind in der Endmontageposition die die Axialstege 33 des Tellerelements 27 unter Aufbrauch des axialen Bewegungsspiels a bis an Druckanlage mit dem Axialanschlag 39 des Befestigungselements 1 geführt. Somit stützt sich das Tellerelement 27 über seine Axialstege 33 am Axialanschlag 39 des Befestigungselements 1 ab, wodurch das Tellerelement 27 den Öffnungsrandbereich des Blechteiles 5 mit einer vordefinierten Klemmkraft gegen die Oberseite 53 der Befestigungsnocken 11, 12 drückt.

Das erfindungsgemäße Befestigungselement 1 kann für Blechteile 5 unterschiedlicher Blechstärke bereitgestellt werden. Hierzu können jeweils unterschiedliche Tellerelemente 27 vorgesehen sein, deren Axialsteg-Höhe h der jeweiligen Blechstärke angepasst ist. Dabei gilt: Je größer die Blechstärke des Blechteiles 5 ist, desto kleiner ist die Axialsteg-Höhe h. Umgekehrt gilt: Je kleiner die Blechstärke des Blechteiles 5 ist, desto größer ist die Axialsteg-Höhe h, um durch Abstützung der Tellerelement-Axialstege 33 am Axialanschlag 39 des Befestigungselements 1 die vordefinierte Klemmkraft zu erzielen.

### Bezugszeichenliste

- 1: Befestigungselement
- 3: Anbauteil
- 5: Blechteil
- 7: Kopfteil
- 9: Elementschaft
- 11, 12: Befestigungsnocken
- 13: Elastomerprofilteil
- 15: Haltenut
- 17: Haltefuß
- 19: kopfseitige Nutwand aus Elastomerkomponente
- 21: schaftseitige Nutwand aus Elastomerkomponente
- 23: radial innerer Nutboden
- 25: Elastomergrundkörper am Kopfteil
- 27: Tellerelement
- 29: Hartkomponente
- 33: Axialsteg
- 35: Ringbund
- 37: Axialnut
- 39: Axialanschlag
- 41: Montageöffnung
- 43: Verliersicherung
- 45: Axialnut
- 47: Vorrast-Steg
- 49: Befestigungsauge
- 51: Drehgriff
- 53: Oberseite des Befestigungsnocken
- a: Bewegungsspiel
- b: Nutbreite
- h: Axialsteg-Höhe

## Patentansprüche

1. Befestigungsanordnung mit einem Befestigungselement (1) zur elastischen Anbindung eines Anbauteils (3) an einem Trägerteil,
wobei das Befestigungselement (1) ein Kopfteil (7) aufweist, das in einen Elementschaft (9) übergeht,
wobei an der Kopfteil-Unterseite ein Elastomerprofilteil (13) mit einer radial nach außen offenen Haltenut (15) angeordnet ist, in die ein Anbauteil-Haltefuß (17) eingreifbar ist, wobei die Haltenut (15) mit einer kopfseitigen Nutwand (19) und einer schaftseitigen Nutwand (21) ausgebildet ist,
wobei das Elastomerprofilteil (13) zumindest zweiteilig aus einem am Kopfteil (7) des Befestigungselements (1) angeordneten Elastomergrundkörper (25) und einem Tellerelement (27) aufgebaut ist, das zumindest die schaftseitige Nutwand (21) der Haltenut (15) aufweist,
**dadurch gekennzeichnet,**
**dass** zur Ausbildung der Axialführung des Tellerelements (27) zumindest ein Axialsteg (33) vom Innenumfang des Tellerelements (27) axial vorragt, der in einer im Nutboden (23) der Haltenut (15) befindlichen Axialnut (37) axial verstellbar, jedoch drehfest geführt ist.

2. Befestigungsanordnung nach Anspruch 1, **dadurch gekennzeichnet, dass** in einem Vormontageprozess das Befestigungselement (1) am Anbauteil-Haltefuß (17) insbesondere spannungsfrei vormontierbar ist, und insbesondere in einem Endmontageprozess das Befestigungselement (1) mit seinem Elementschaft (9) durch eine Montageöffnung (41) des Trägerteils (5) bis in eine Endmontageposition führbar ist, in der das Kopfteil (7) das Elastomerprofilteil (13) mit elastischer Vorspannung gegen das Blechteil (5) drückt, so dass der Anbauteil-Haltefuß (17) elastisch vorgespannt ist.

3. Befestigungsanordnung nach Anspruch 1 oder 2, **dadurch gekennzeichnet, dass** das Tellerelement (27) über ein Bewegungsspiel (a) axial verstellbar auf dem Elementschaft (9) gelagert ist, und dass insbesondere das Tellerelement (27) leichtgängig in Axialrichtung verstellbar ist, um den Vormontage- oder Endmontageprozess zu vereinfachen.

4. Befestigungsanordnung nach Anspruch 1, 2 oder 3, **dadurch gekennzeichnet, dass** die Axialnut (37) als eine Materialunterbrechung im Elastomermaterial des Elastomergrundkörpers (25) ausgebildet ist.

5. Befestigungsanordnung nach Anspruch 4, **dadurch gekennzeichnet, dass** die im Nutboden (23) der Haltenut (15) befindliche Axialnut (37) kopfseitig mit einem Axialanschlag (39) endet, der im Endmontageprozess eine Axialbewegung des Tellerelements (27) in Richtung auf das Kopfteil (7) begrenzt, und damit insbesondere eine Steckbewegung des Befestigungselements (1) in die Montageöffnung (41) des Blechteils (5) während des Endmontageprozesses begrenzt.

6. Befestigungsanordnung nach einem der vorhergehenden Ansprüche, **dadurch gekennzeichnet, dass** das Tellerelement (27) als ein Zwei-Komponenten-Bauteil ausgebildet ist, und zwar mit der schaftseitigen Nutwand (21) aus Elastomermaterial, die die Weichkomponente bildet, und einer der Schaftspitze zugewandten Hartkomponente (29), die im Endmontagezustand auf dem Trägerteil (5) abgestützt ist.

7. Befestigungsanordnung nach einem der vorhergehenden Ansprüche, **dadurch gekennzeichnet, dass** das Befestigungselement (1) an der Schaftspitze des Elementschafts (9) zumindest einen Befestigungsnocken (11, 12) aufweist, der vom Elementschaft (9) radial nach außen abragt, und dass insbesondere im Endmontageprozess eine Steck-Dreh-Betätigung erfolgt, bei der das Befestigungselement (1) in der Steckrichtung durch die Montageöffnung (41) des Blechteils (5) führbar ist und anschließend das Befestigungselement (12) bis in die Endmontageposition drehbar ist, in der der Befestigungsnocken (11, 12) einen Öffnungsrandbereich des Trägerteils (5) untergreift, und dass insbesondere in der Endmontageposition der Öffnungsrandbereich des Trägerteils (5) mit der axialen Vorspannung zwischen dem Tellerelement (27) und einer Oberseite (53) des Befestigungsnockens (11,12) geklemmt ist.

8. Befestigungsanordnung nach einem der vorhergehenden Ansprüche, **dadurch gekennzeichnet, dass** in der Endmontageposition der Axialsteg (33) des Tellerelements (27) unter Ausnutzung des axialen Bewegungsspiels (a) bis in Druckanlage mit dem Axialanschlag (39) des Befestigungselements (1) geführt ist, an dem sich das Tellerelement (27) abstützt, um das Trägerteil (5) mit einer vordefinierten Klemmkraft gegen die Oberseite (53) des Befestigungsnockens (11, 12) zu drücken, wobei bevorzugt im endmontierten Zustand das Bewegungsspiel (a) größer als 0 ist.

9. Kit umfassend eine Befestigungsanordnung nach Anspruch 8, und mindestens ein weiteres Tellerelement, das für die Befestigungsanordnung geeignet ist, wobei die einzelnen Tellerelemente unterschiedliche Axialsteg-Höhen aufweisen, so dass für Trägerteile (5) unterschiedlicher Materialstärke jeweils Tellerelemente (27) verfügbar sind, deren Axialsteg-Höhe (h) im Zusammenspiel mit der Nutbreite (b) der jeweiligen Materialstärke angepasst ist, das heißt insbesondere je größer die Materialstärke des Trägerteils (5), desto kleiner die Axialsteg-Höhe (h) bzw. je kleiner die Materialstärke des Trägerteils (5), desto größer die Axialsteg-Höhe (h).

## Claims

1. Fastening arrangement comprising a fastening element (1) for the elastic connection of an add-on part (3) to a support part,
wherein the fastening element (1) has a head section (7) that transitions into an element shank (9),
wherein an elastomer profile part (13) with a retaining groove (15) which is open radially to the outside, and into which a retaining foot (17) of the add-on part can engage, is arranged on the underside of the head section,
wherein the retaining groove (15) is designed with a groove wall (19) on the head side and a groove wall (21) on the shank side,
wherein the elastomer profile part (13) is constructed at least in two parts from an elastomer body (25) arranged on the head section (7) of the fastening element (1) and from a disk element (27) which has at least the shank-side groove wall (21) of the retaining groove (15),
**characterized in that**
for the purpose of forming the axial guide of the disk element (27), at least one axial rib (33) projects axially from the inner perimeter of the disk element (27), and is guided in an axial groove (37) located in the groove bottom (23) of the retaining groove (15) so as to be axially movable but rotationally fixed.

2. Fastening arrangement according to claim 1, **characterized in that** the fastening element (1) can be preassembled on the retaining foot (17) of the add-on part free of stress in a preassembly process, and in particular the element shank (9) of the fastening element (1), in a final assembly process, can be passed through a mounting hole (41) in the support part (5) into a final assembly position in which the head section (7) presses the elastomer profile part (13) against the panel (5) with elastic preloading so that the retaining foot (17) of the add-on part is elastically preloaded.

3. Fastening arrangement according to claim 1 or 2, **characterized in that** the disk element (27) is supported on the element shank (9) so as to be axially movable through a movement play (a), **and in that** in particular the disk element (27) can be moved easily in the axial direction in order to simplify the preassembly or final assembly process.

4. Fastening arrangement according to claim 1, 2 or 3,
**characterized in that** the axial groove (37) is designed as a material discontinuity in the elastomer material of the elastomer body (25).

5. Fastening arrangement according to claim 4, **characterized in that** the axial groove (37) located in the groove bottom (23) of the retaining groove (15) terminates on the head side with an axial stop (39) that limits an axial movement of the disk element (27) toward the head section (7) in the final assembly process, and thereby in particular limits a plug-in motion of the fastening element (1) into the mounting hole (41) of the panel (5) during the final assembly process.

6. Fastening arrangement according to any one of the preceding claims,
**characterized in that** the disk element (27) is designed as a two-component part, namely with the groove wall (21) being made of an elastomer material on the shank side, and constituting the soft component, and with a hard component (29) that faces the shank tip and is supported on the support part (5) in the final assembled state.

7. Fastening arrangement according to any one of the preceding claims,
**characterized in that** the fastening element (1) has, on the shank tip of the element shank (9), at least one mounting boss (11, 12) that projects radially outward from the element shank (9), **and in that** in particular a plug-in/rotate actuation is carried out in the final assembly process, in which the fastening element (1) can be passed through the mounting hole (41) in the panel (5) in the plug-in direction, and then the fastening element (12) can be rotated into the final assembly position, in which the mounting boss (11, 12) engages beneath an edge region of the opening in the support part (5), **and in that** in particular the edge region of the opening in the support part (5) is clamped by the axial preloading between the disk element (27) and an upper side (53) of the mounting boss (11, 12) in the final assembly position.

8. Fastening arrangement according to any one of the preceding claims,
**characterized in that** in the final assembly position the axial rib (33) of the disk element (27) is guided into pressure contact with the axial stop (39) of the fastening element (1), on which stop the disk element (27) is supported, utilizing the axial movement play (a), in order to press the support part (5) against the upper side (53) of the mounting boss (11, 12) with a predefined clamping force, wherein the movement play (a) is preferably greater than 0 in the final assembled state.

9. Kit comprising a fastening arrangement according to claim 8, and at least one further disk element which is suitable for the fastening arrangement, wherein the individual disk elements have different axial rib heights, so that for support parts (5) of different material thickness, disk elements (27) are available whose axial rib height (h) is matched, in interaction with the groove width (b), to the material thickness in question, i.e. in particular the greater the material thickness of the support part (5) the smaller will be the axial rib height (h) or the smaller the material thickness of the support part (5) the greater will be the axial rib height (h).

## Revendications

1. Agencement de fixation comportant un élément de fixation (1) pour la liaison élastique d'une pièce rapportée (3) à une pièce de support,
dans lequel l'élément de fixation (1) présente une pièce de tête (7) qui se prolonge par une tige d'élément (9),
dans lequel une pièce profilée en élastomère (13) comportant une rainure de maintien (15) ouverte radialement vers l'extérieur est agencée sur la face inférieure de pièce de tête, dans laquelle rainure un pied de maintien de pièce rapportée (17) peut venir en prise,
dans lequel la rainure de maintien (15) est réalisée avec une paroi de rainure côté tête (19) et une paroi de rainure côté tige (21),
dans lequel la pièce profilée en élastomère (13) est constituée au moins en deux pièces d'un corps de base en élastomère (25) agencé sur la pièce de tête (7) de l'élément de fixation (1) et d'un élément en forme de disque (27) qui présente au moins la paroi de rainure côté tige (21) de la rainure de maintien (15),
**caractérisé en ce**
**que**, pour réaliser le guidage axial de l'élément en forme de disque (27), au moins une nervure axiale (33) fait saillie axialement à partir de la périphérie intérieure de l'élément en forme de disque (27), nervure qui est guidée de manière à être réglable axialement, mais fixe en rotation, dans une rainure axiale (37) située dans le fond de rainure (23) de la rainure de maintien (15).

2. Agencement de fixation selon la revendication 1, **caractérisé en ce que,** dans un processus de prémontage, l'élément de fixation (1) peut être prémonté sur le pied de maintien de pièce rapportée (17), en particulier sans contrainte, et en particulier, dans un processus de montage final, l'élément de fixation (1) peut être guidé avec sa tige d'élément (9) à travers une ouverture de montage (41) de la pièce de support (5) jusqu'à une position de montage final dans laquelle la pièce de tête (7) presse la pièce profilée en élastomère (13) avec une précontrainte élastique contre la pièce en tôle (5), de sorte que le pied de maintien de pièce rapportée (17) est précontraint élastiquement.

3. Agencement de fixation selon la revendication 1 ou 2,
**caractérisé en ce que** l'élément en forme de disque (27) est monté sur la tige d'élément (9) de manière à pouvoir être réglé axialement par l'intermédiaire d'un jeu de mouvement (a), **et en ce que,** en particulier l'élément en forme de disque (27) peut être réglé facilement dans la direction axiale afin de simplifier le processus de prémontage ou de montage final.

4. Agencement de fixation selon la revendication 1, 2 ou 3,
**caractérisé en ce que** la rainure axiale (37) est réalisée comme une interruption de matériau dans le matériau élastomère du corps de base en élastomère (25).

5. Agencement de fixation selon la revendication 4, **caractérisé en ce que** la rainure axiale (37) se trouvant dans le fond de rainure (23) de la rainure de maintien (15) se termine côté tête par une butée axiale (39) qui, lors du processus de montage final, limite un mouvement axial de l'élément en forme de disque (27) en direction de la pièce de tête (7), et limite ainsi en particulier un mouvement d'enfichage de l'élément de fixation (1) dans l'ouverture de montage (41) de la pièce en tôle (5) pendant le processus de montage final.

6. Agencement de fixation selon l'une des revendications précédentes,
**caractérisé en ce que** l'élément en forme de disque (27) est réalisé comme un élément structurel à deux composants, à savoir comportant la paroi de rainure (21) côté tige en matériau élastomère, qui forme le composant mou, et un composant dur (29) tourné vers la pointe de tige, qui s'appuie sur la pièce de support (5) à l'état de montage final.

7. Agencement de fixation selon l'une des revendications précédentes,
**caractérisé en ce que** l'élément de fixation (1) présente, à la pointe de tige de la tige d'élément (9), au moins une came de fixation (11, 12) qui fait saillie radialement vers l'extérieur de la tige d'élément (9), **et en ce que,** en particulier dans le processus de montage final, un actionnement d'enfichage et de rotation est effectué, lors duquel l'élément de fixation (1) peut être guidé dans la direction d'enfichage à travers l'ouverture de montage (41) de la pièce en tôle (5) et ensuite l'élément de fixation (12) peut être tourné jusque dans la position de montage final dans laquelle la came de fixation (11, 12) vient en prise sous une zone de bord d'ouverture de la pièce de support (5), **et en ce que,** en particulier dans la position de montage final, la zone de bord d'ouverture de la pièce de support (5) est serrée avec la précontrainte axiale entre l'élément en forme de disque (27) et une face supérieure (53) de la came de fixation (11, 12).

8. Agencement de fixation selon l'une des revendications précédentes,
**caractérisé en ce que,** dans la position de montage finale, la nervure axiale (33) de l'élément en forme de disque (27) est guidée jusqu'à venir en appui contre la butée axiale (39) de l'élément de fixation (1) en utilisant le jeu de mouvement (a) axial, sur laquelle l'élément en forme de disque (27) s'appuie pour presser la pièce de support (5) avec une force de serrage prédéfinie contre la face supérieure (53) de la came de fixation (11, 12), dans lequel le jeu de mouvement (a) est de préférence supérieur à 0 à l'état de montage final.

9. Kit comprenant un agencement de fixation selon la revendication 8, et au moins un autre élément en forme de disque qui convient pour l'agencement de fixation, dans lequel les différents éléments en forme de disque présentent des hauteurs de nervure axiale différentes, de sorte que pour des pièces de support (5) d'épaisseurs de matériau différentes, des éléments en forme de disque (27) d'épaisseurs de matériau différentes sont disponibles, éléments dont la hauteur de nervure axiale (h) est adaptée à l'épaisseur de matériau respective en coopération avec la largeur de rainure (b), c'est-à-dire en particulier que plus l'épaisseur de matériau de la pièce de support (5) est grande, plus la hauteur de nervure axiale (h) est petite, ou plus l'épaisseur du matériau de la pièce de support (5) est faible, plus la hauteur de la nervure axiale (h) est grande.
